Europäisches Patentamt

European Patent Office

Office européen des brevets

(11) Publication number: **0 172 057**
**A1**

## (12) EUROPEAN PATENT APPLICATION

(21) Application number: **85401337.2**

(22) Date of filing: **02.07.85**

(51) Int. Cl.⁴: **C 08 J 5/06**
**D 06 M 10/00**

(30) Priority: **05.07.84 JP 139586/84**
**09.07.84 JP 141975/84**
**09.07.84 JP 141976/84**

(43) Date of publication of application:
**19.02.86 Bulletin 86/8**

(84) Designated Contracting States:
**DE FR GB NL**

(71) Applicant: **Shin-Etsu Chemical Co., Ltd.**
**6-1, Ohtemachi 2-chome**
**Chiyoda-ku, Tokyo100(JP)**

(71) Applicant: **THE YOKOHAMA RUBBER CO., LTD.**
**36-11, Shinbashi 5-chome Minato-ku**
**Tokyo, 105(JP)**

(72) Inventor: **Shuuji, Takahashi**
**203-11-101, Takamura Hiratsuka-shi**
**Kangawa-ken(JP)**

(72) Inventor: **Yasuo, Suzuki**
**3-19-7, Nakahara Hiratsuka-shi**
**Kanagawa-ken(JP)**

(72) Inventor: **Susumu, Ueno**
**9809-7, Yatabe Hazaki-cho**
**Kashima-gun Ibaraki-ken(JP)**

(72) Inventor: **Kouiti, Kuroda**
**9809-7, Yatabe Hazaki-cho**
**Kashima-gun Ibaraki-ken(JP)**

(72) Inventor: **Hajime, Kitamura**
**6-14-2, Aobadai Haraichi**
**Chiba-shi Chiba-ken(JP)**

(74) Representative: **Armengaud, Alain et al,**
**Cabinet ARMENGAUD AINE 3 Avenue Bugeaud**
**F-75116 Paris(FR)**

(54) An improvement in a fabric-reinforced rubber article.

(57) The invention provides an improvement in the adhesive strength between the rubber matrix of a fabric-reinforced rubber article, e.g. automobile tires, and the reinforcing fabric material of synthetic polyester or aramid fibers or carbon fibers embedded in the rubber matrix. The improvement can be obtained by exposing the reinforcing fabric material before incorporation into rubber to exposure to low temperature plasma generated in an atmosphere of an inorganic gas which is preferably oxygen or an oxygen-containing gaseous mixture. The effect of the plasma treatment can be further enhanced by coating the plasma-treated fabric material with a liquid coating composition containing a prepolymeric condensate of resorcine and formaldehyde and a synthetic rubber latex.

AN IMPROVEMENT IN A FABRIC-REINFORCED RUBBER ARTICLE

BACKGROUND OF THE INVENTION

The present invention relates to an improvement in a fabric-reinforced rubber article such as automobile tires, rubber-made belts and hoses and the like reinforced with a fibrous material such as natural and synthetic organic fibers and inorganic fibers, e.g. carbon fibers. More particularly, the invention relates to a method for remarkably increasing the adhesion between the rubber and the reinforcing fabric material embedded therein.

As is well known, many of the rubber articles are reinforced with a fabric material embedded therein including, for example, automobile tires, rubber-made belts and hoses and the like. The fabric materials used for rubber reinforcement are mostly of synthetic and semi-synthetic fibers such as rayons, nylons, polyvinyl alcohol fibers, polyester fibers, aramid fibers and the like but inorganic fibers such as carbon fibers are also promising. Each of these fibers has its own advantages and disadvantages but the polyester and aramid fibers as well as carbon fibers are the most promising and preferable in many respects including the tensile strength, impact strength, elongation resistance, dimensional stability, heat resistance, water resistance, resistance against chemicals, weathering resistance and other properties. They are, however, not without problems as a fibrous material for rubber-reinforcement. For example, the adhesive strength is relatively poor between these fibers and most of natural and synthetic rubbers so that the reinforcing effect is not always quite satisfactory in the rubber articles reinforced with a fabric material of these fibers. Accordingly, various attempts and proposals have been made hitherto to improve the adhesion between the fibers and rubbers.

For example, Japanese Patent Kokai 55-1393 discloses a method in which a cord of twisted polyamide fibers and the like is subjected to exposure to an atmosphere of low temperature plasma before it is woven into a fabric to be used for rubber reinforcement. A problem in this method is the relaxation or untwisting of the cord twist in the course of weaving into a fabric to such a great extent that the untreated surface portion is always exposed on the surface of the cord so that the desired improvement in the reinforcement cannot be satisfactory. This is a natural consequence of the fundamental mechanism of the plasma treatment, the effect of which is usually limited to the very surface of the material under treatment. For example, while a tire cord is formed by twisting several cords with each other, each of which in turn is formed of a large number of fine filaments, the effect of the plasma treatment is limited to the surface portion of the tire cord so that the effect of the plasma treatment is not sufficient in a fabric made by weaving such cords because untwisting of the cords during weaving brings the untreated filaments on to the surface portion of the cord.

Alternatively, a method is proposed for the improvement of the adhesion between rubbers and fabric materials used for the reinforcement of the rubbers in which the fabric material before fabrication into rubber articles is dipped in a liquid mixture prepared by admixing a prepolymeric condensate of resorcine and formaldehyde with a rubber latex (referred to as RFL adhesive hereinbelow) followed by drying and baking. Although this method is considerably effective for several of synthetic and semi-synthetic fibers, no satisfactory improvement can be obtained in the adhesive strength between rubbers and fabric materials when the fabric material is made of polyester, aramid or carbon fibers. This is because the polyester fibers have low functionality on the surface as a consequence of their molecular structure and poor wettability with the RFL adhesive and the aramid fibers are highly crystalline with outstanding molecular orientation in addition to the strong intermolecular hydrogen bonds formed at the amide groups as a functional group. Further, the adhesion of carbon fibers can little be improved by the method because they have an extremely low functionality due to their chemical composition composed almost solely of carbon atoms and also they are highly crystalline and oriented in structure.

- 4 -

0172057

Conventional methods for improving the adhesion between polyester or aramid fibers or carbon fibers and rubbers include, for example, a method of one-step treatment in which the fibers are treated with an adhesive having good compatibility therewith such as a polycondensate of a halogenated phenol and an aldehyde compound, a method of two-step treatment in which the fibers are first treated with an epoxy compound, isocyanate compound or a mixture thereof followed by the above mentioned RFL adhesive. The former method is, however, not quite effective for improving the adhesive strength and the latter method has a problem in the workability of the treatment agents in addition to the rather poor adhesive strength after thermal aging.

## SUMMARY OF THE INVENTION

It is therefore an object of the present invention to provide an improvement in rubber articles reinforced with a fabric material of, in particular, polyester or aramid fibers as well as carbon fibers.

More particularly, the object of the present invention is to improve the adhesive strength between a rubber and a reinforcing fabric material therefor made, in particular, of polyester or aramid fibers as well as carbon fibers.

Thus, the improvement provided by the invention in a fabric-reinforced rubber article comprises subjecting a woven fabric, prior to fabrication into a rubber article with a rubber composition, to exposure to an atmosphere of low temperature plasma by continuously passing the fabric through the plasma atmosphere of an inorganic gas, such as oxygen gas or a gaseous mixture containing at least 10 % by volume of oxygen, under a reduced pressure in the range from 0.001 to 10 Torr generated by the glow discharge.

The effect of the improvement in the adhesion obtained by the above described low temperature plasma treatment can further be increased, when the woven fabric material is made of polyester or aramid fibers or carbon fibers, in particular, by coating the plasma-treated fabric material with an aqueous liquid mixture of a rubber latex and a prepolymeric condensate of resorcine and formaldehyde followed by drying and baking.

## BRIEF DESCRIPTION OF THE DRAWING

FIGURE 1 is a schematic cross sectional illustration of an apparatus for the continuous plasma treatment of a web-like fabric material.

FIGURE 2 is an enlarged schematic cross sectional illustration of the plasma chamber in an apparatus for plasma treatment.

FIGURES 3, 4a and 4b are each a schematic illustration of the dispositional relation between the discharge electrodes in the plasma chamber and the web-like fabric material running in the plasma atmosphere.

FIGURE 5 is a perspective view of a 2-ply rubber article showing a partial cross section of a stratified structure.

DETAILED DESCRIPTION OF THE PREFERRED EMBODIMENTS

The material subjected to the plasma treatment in the inventive method is a woven fabric used for the reinforcement of rubber articles. Although the kind of the fibers forming the woven fabric is not particularly limitative, the inventive method is particularly effective when the reinforcing fabric material is formed of polyester or aramid fibers or carbon fibers twisted with each other to form a cord. The pick is preferably of a thickness of a relatively low yarn number of 20S to 30S or 50 D to 250 D. The manner of weaving is preferably a plain weave in which the warps and picks run perpendicularly to each other and the construction of the fabric is reed screen-like with a warp end count of 20 to 70 cords per 5 cm width and a pick count of 2.0 to 6.0 cords per 5 cm length. The width of the fabric is usually in the range from 100 to 200 cm. Although the end count can be determined as desired depending on the thickness and strength of the cord, the preferable range of the end count is as mentioned above becasue a woven fabric

0172057

having a too low end count can hardly retain a form of a woven material while a too high warp end count may cause difficulties against impregnation with a rubber compound in the fabrication of a reinforced rubber article following the plasma treatment of the woven fabric. The picks serve for preventing untwisting of the warps and for keeping the flatness of the woven fabric so that the pick count should be in the above mentioned range. When the pick count is too low, difficulties are caused not only in the prevention of untwisting of the cords but also in respect of the increase in the breaking of the picks in the course of the continuous treatment. A too high pick count is economically disadvantageous due to the unnecessary number of the picks having no contribution to retain the form of a woven fabric or to increase the reinforcing effect of the woven fabric material in addition to the technological disadvantage that the number of the intersections between the contacting warps and picks is increased while the effect of the plasma treatment is sometimes insufficient at such an intersection with contacting surfaces of the warps and picks.

It is preferable that the warps in each of the selvages of the woven fabric includes 2 to 10 sets of an alternate alignment of an S-twisted cord and a Z-twisted cord relative to the direction of the final twisting in order to prevent unevenness of the effect of the plasma treatment due to the curling along the selvages. The relatively small thickness of the pick cords above mentioned is preferred in consideration of the adhesive strength of the woven fabric and the
rubber in the fabricated rubber article.

Although it is usual that the warp cords are treated
with an oily finish in the step of the preparation of the
base yarns, the amount of the finish left on the cord should
preferably be 10 % by weight or smaller when the woven fabric is subjected to the plasma treament because a too large
amount of the finish on the cords is detrimental against the
stability of the plasma atmosphere in addition to the deposition of a decomposition product thereof which acts against
the adhesive bonding between the woven fabric and the rubber
compound.

The polyester fiber usable for rubber reinforcement and
implied in the present invention is typically a polyethylene
terephthalate fiber although other types of polyester fibers
can be used equally. The aramid fiber usable for rubber reinforcement includes fibers of poly(1,4-phenylene terephthalamide), poly(1,3-phenylene terephthalamide), poly(1,4-
benzamide) and the like. PAN-based and pitch-based carbon
fibers are also useful for rubber reinforcement.

The plasma treatment of the woven fabric is performed
by continuously passing the continuous-length web of the woven fabric through an atmosphere of low temperature plasma generated in a plasma chamber filled with an inorganic gas under a reduced pressure of 0.001 to 10 Torr with impression of an electric power between the electrodes of the plasma chamber to induce glow discharge. Although the disposition of the electrodes relative to the plasma chamber is not particularly limitative, it is preferable that the electrodes are installed inside the plasma chamber in order to increase the efficiency of the plasma treatment with a shortened treatment time and in order to have the effect of the treatment reaching the very depth of the woven fabric texture. The form of the electrodes installed inside the plasma chamber is not particularly limitative including rod-like ones, plate-like ones, ring-like ones and others. It is preferable that the electrodes can be cooled from inside, for example, by passing cooling water through a hollow, e.g. tubular, electrode body. The material of the electrodes may be copper, steel, aluminum, stainless steel and the like. It is preferable that the electrodes are provided on the surface with a heat-resistant insulating coating layer of a material having a dielectric strength of at least 10,000 volts per mm such as porcelain enamel, glass, ceramic and the like although the grounded electrode may not be provided with such a coating. It is a practical design that the inner walls of the metal-made plasma chamber is used as the grounded electrode. At any rate, the grounded electrode also should be provided with a cooling means in order to avoid any adverse influences caused by the temperature increase when glow discharge is induced between the electrodes. The distance between the input and grounded electrodes should be in the range from 1 to 30 cm or, preferably, from 3 to 15 cm in view of the disadvantages that no good matching can be obtained in the high frequency power supply to decrease the stability of the power supply with consequently decreased effect of the plasma treatment when the distance is too large and the adverse thermal influences on the nature of the woven fabric under treatment when the distance is too small.

Various kinds of inorganic gases are usable as the gas introduced into the plasma chamber under the above specified reduced pressure including, for example, helium, argon, neon, nitrogen, oxygen, air, nitrous oxide, nitrogen monoxide, nitrogen dioxide, carbon monoxide, carbon dioxide and the like. These gases may be used either singly or as a mixture of two kinds or more according to need. In particular, the plasma-supporting gas is preferably oxygen gas or a gaseous mixture containing at least 10 % by volume of oxygen in view of the higher efficiency of the treatment than the other inorganic gases. Organic gases are undesirable in the plasma atmosphere and the amount or proportion thereof should be limited not to exceed a relatively low upper limit when it is used for one or other reasons.

Low temperature plasma can readily be generated in the plasma chamber when stable glow discharge is induced by the impression of an electric power of 10 watts to 100 kilowatts at a frequency of 10 kHz to 100 MHz between the input electrode and the grounded electrode installed inside the plasma chamber kept under a reduced pressure of 0.001 to 10 Torr. The frequency of the power supply is not limited to the above mentioned high frequency but may be in the range from direct current to low AC frequency to microwaves. The atmospheric pressure inside the plasma chamber should be in the above mentioned range because a higher pressure than 10 Torr may result in an undue temperature increase in the woven fabric under treatment caused by the glow discharge so that denaturation and degradation of the fibers may be sometimes unavoidable while a pressure lower than 0.001 Torr is undesirable due to the instability in the glow discharge to cause unevenness in the result of the plasma treatment. The discharge voltage and the discharge current between the electrodes are preferably at least 3000 volts and in the range from 5 to 30 amperes, respectively, in order to obtain a more remarkable effect of the plasma treatment. The duration of the plasma treatment, i.e. the length of time taken by the running web of the woven fabric through the plasma atmosphere, may be in the range from a few seconds to several tens of seconds.

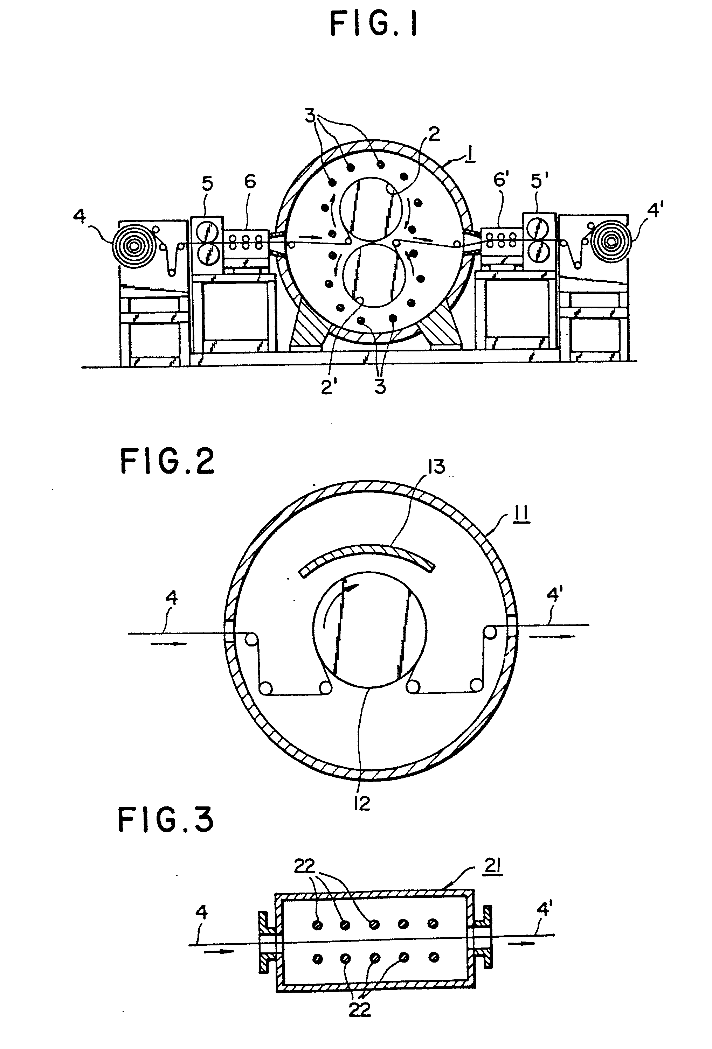

In the following, a more particular manner for the plasma treatment of a continuous-length woven fabric is described with reference to the accompanying drawing. FIGURE 1 is a schematic cross sectional illustration of an apparatus used for the continuous plasma treatment, in which the large drum-like plasma chamber 1 contains two rotatable grounded electrodes 2, 2' each of a drum-like form and a number of rod-like input electrodes 3 surrounding the grounded electrodes 2, 2'. The continuous-length web of the woven fabric drawn out of the roll 4 is introduced into the plasma chamber 1 through the driving rollers 5 and the inlet vacuum-sealing port 6, runs in the chamber 1 contacting the surfaces of the rotating grounded electrodes 2 and 2' successively and then is led out of the plasma chamber 1 through the outlet vacuum-sealing port 6' to be wound up in a roll 4' by means of the pulling rollers 5'. In the course of running on the surfaces of the grounded electrodes 2, 2', the running web of the woven fabric material is exposed to the atmosphere of low temperature plasma generated between the grounded electrodes 2, 2' and the input electrodes 3 facing the formers keeping a distance when an electric power is impressed between the electrodes. As is seen in the figure, the fabric is exposed to the plasma atmosphere at one surface when it is running on the grounded electrode 2 while the other surface thereof is exposed to the plasma atmosphere when the fabric is running on the grounded electrode 2'. It is of course optional that the take-up roll 4' is omitted and, instead, the continuous-length fabric coming out of the plasma chamber is directly introduced into the fabrication process of the fabric-reinforced rubber articles such as automobile tires.

FIGURE 2 is a schematic cross sectional view of a plasma chamber of a different type in which a single rotatable grounded electrode 12 is installed in the plasma chamber 11 and a set of input electrodes 13 are held to face the grounded electrode 12 keeping a space through which the continuous-length woven fabric runs. It is of course that the effect of the plasma treatment is predominant on one surface alone of the running fabric in the plasma chamber of this type.

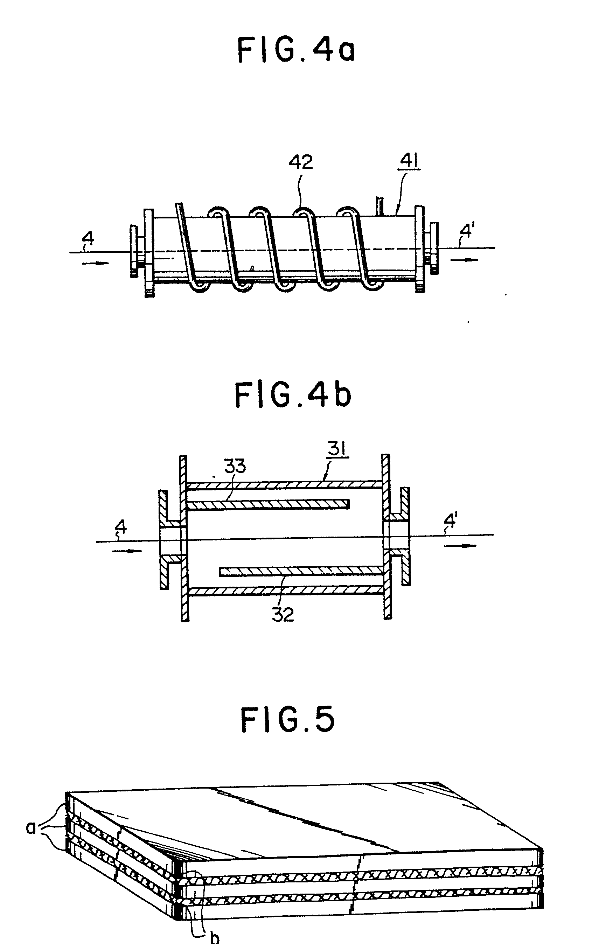

FIGURE 3 is an illustration of another type of the plasma treatment apparatus in which the continuous-length woven fabric 4 runs through the space between two sets of electrodes 22 installed inside a plasma chamber 21 which serves also as a grounded electrode. FIGURE 4b is an illustration of a further different type of the apparatus in which the continuous-length fabric material runs through the space between the oppositely facing grounded electrode 32 and the input electrode 33. FIGURE 4a is an illustration of an example of the apparatus provided with an external electrode 42 of a high frequency work coil surrounding the plasma chamber 41 through which the continuous-length fabric material 4 is running.

Although the above described treatment in the atmosphere of low temperature plasma is quite effective for improving the adhesion between the polyester or aramid fibers or carbon fibers and the rubbers reinforced therewith, a further increased improvement can be obtained when the plasma-treated fabric material is treated or coated with the RFL adhesive described before. That is, the RFL adhesive is a liquid mixture prepared by admixing a prepolymeric condensate of resorcine and formaldehyde with a rubber latex. The molar ratio of resorcine and formaldehyde to be condensed together into the prepolymeric condensate should be in the range from 1:0.5 to 1:4 or, preferably, from 1:1 to 1:2 from the standpoint of obtaining good adhesion to the plasma-treated fibers.

Various kinds of rubber latexes are usable as a component of the RFL adhesive including, for example, natural rubber latex, latexes of a copolymeric rubber of vinylpyridine, styrene and butadiene, latexes of a copolymeric rubber of styrene and butadiene, latexes of a copolymeric rubber of acrylonitrile and butadiene, latexes of a polychloroprene rubber and the like. The mixing ratio of the rubber latex to the prepolymeric condensate by weight should be in the range from 1:0.05 to 1:0.5 or, preferably, 1:0.15 to 1:0.25 as solid. The mixture should be weakly alkaline and have a pH in the range from 9 to 11.

The coating treatment of the plasma-treated fabric material with the above described RFL adhesive may be performed in any convenient manner including dipping of the fabric material in the liquid mixture and application of the liquid mixture to the fabric material by spraying, brushing, roll coating and the like. The coated fabric material should be completely dry before it is processed into a fabric-reinforced rubber article as a matter of course.

In the following, the method of the invention is described in more detail by way of examples.

Example 1 and Comparative Example 1.

Using polyester cords of each 1500 D/2 (40Z by 40S turns/10 cm) as the warps and 30S Polynosic threads (tradename by American Enka Co.) as the picks, a plain-woven fabric of a 160 cm width suitable as a tire cord was prepared with an end count of 50 cords/5 cm and a pick count of 4.0 picks/5 cm.

The above prepared plain-woven fabric material was subjected to the plasma treatment in an apparatus illustrated in FIGURE 1. Thus, while the pressure inside the plasma chamber was kept at 0.1 Torr by the balance of the continuous introduction of oxygen gas at a constant rate of 2 liters/minute and continuous evacuation, the fabric material was run through the atmosphere of low temperature plasma generated by the impression of an electric power of 40 kilowatts at a frequency of 110 kHz between the electrodes to induce glow discharge. Each of the input electrodes was in the form of a rod coated with a glass tubing and kept at a distance of 5 cm from the surface of each of the water-cooled grounded electrodes contacting the running fabric material. The discharge voltage and the discharge current between the electrodes were 5.5 kV and 20 A, respectively, and the woven fabric was run through the plasma atmosphere taking about 10 seconds (Example 1).

For comparison, the same treatment as above was repeated excepting the increase of the pressure inside the plasma chamber to 20 Torr (Comparative Example 1).

Each of the thus plasma treated fabric materials was used for the reinforcement of a rubber article to find that the effect of reinforcement is clearly superior with the fabric material treated under the pressure in the plasma treatment of 0.1 Torr than with the fabric material after the comparative treatment under a pressure of 20 Torr.

Example 2.

A plain-woven fabric material similar to that in Example 1 was prepared using multi-filaments of poly(1,4-phenylene terephthalamide) each of 1500 D/2 (30Z by 30S turns/10 cm) and subjected to the plasma treatment in an apparatus illustrated in FIGURE 2. Thus, while the pressure inside the plasma chamber was kept at 0.5 Torr by the balance of continuous introduction of oxygen and argon at rates of 2 liters/minute and 3 liters/minute, respectively, and continuous evacuation, the woven fabric was run between the electrodes and exposed to the atmosphere of low temperature plasma generated by the impression of a high frequency electric power of 5 kilowatts at a frequency of 13.56 MHz to induce glow discharge. Each of the input electrodes was of a porcelain enamel-coated plate-like form and held 10 cm apart from the surface of the water-cooled grounded electrode contacted with the running fabric material. The discharge voltage and the discharge current between the electrodes were 4.0 kV and 15 A, respectively, and the woven fabric was run through the plasma atmosphere taking about 50 seconds.

Example 3.

The same plain-woven fabric material as in Example 1 was subjected to a plasma treatment in an apparatus illustrated in FIGURE 3. Thus, while the pressure inside the plasma chamber was kept at 0.2 Torr by the balance of continuous introduction of oxygen and nitrogen each at a rate of 1 liter/minute and continuous evacuation, the woven fabric was run between the arrays of the input electrodes and exposed to the atmosphere of low temperature plasma generated by the impression of an electric power of 20 kilowatts at a frequency of 110 kHz between the input electrodes and the walls of the plasma chamber as the grounded electrode to induce glow discharge. Each of the upper and lower arrays of the input electrodes contained five rod-like electrodes positioned 10 cm apart. The woven fabric ran through the space between the electrode arrays taking 50 seconds.

Example 4 and Comparative Example 2.

The same woven fabric as prepared and used in Example 2 was subjected to a plasma treatment in an apparatus illustrated in FIGURE 4a (Comparative Example 2) or FIGURE 4b (Example 4). In each case, the pressure inside the plasma chamber was kept at 0.7 Torr by the balance of continuous introduction of oxygen at a rate of 100 ml/minute and continuous evacuation and the woven fabric was exposed to the atmosphere of low temperature plasma generated by the impression of an electric power of 2 kilowatts at a frequency of 110 kHz. The woven fabric ran through the atmosphere of low temperature plasma taking 3 minutes in each of the treatments. The distance between the water-cooled, plate-like electrodes in the apparatus of FIGURE 4b was 5 cm.

Example 5.

The woven fabrics plasma-treated in Examples 1 to 4 and Comparative Examples 1 and 2 were subjected to the test for the adhesive strength with a rubber in the following manner. Thus, warp cords taken out of each fabric material were embedded in a rubber compound A or B prepared with the formulation indicated below followed by curing of the rubber compound at 150 °C for 30 minutes and then pulled out forcibly from the cured rubber to record the force required for pulling-out in kg/8 mm. For comparison, the same test was undertaken for the cords of the same polyester and aramid fibers before the plasma treatment. The results are shown in

Formulation of rubber compounds A and B (parts by weight)

| Rubber compound | A | B |
|---|---|---|
| NR (RSS #1) | - | 100 |
| NR (RSS #3) | 70 | - |
| SBR 1500 | 20 | - |
| IR 2200 | 10 | - |
| Zinc oxide | 5 | 5 |
| Stearic acid | 2 | 3 |
| Carbon black (GPF) | 50 | - |
| Carbon black (HAF) | - | 40 |
| Hydrated silica | - | 10 |
| Poly(2,2,4-trimethyldihydroquinoline) | 2 | 1 |
| Paraffin oil | 5 | 5 |
| Sulfur | 3 | 3 |
| Resorcine | - | 3 |
| Hexamethylene tetramine | - | 2 |
| N-Cyclohexyl-2-benzothiazyl sulfenamide | 1 | - |
| N-Oxydiethylene-2-benzothiazyl sulfenamide | - | 0.5 |

- 20 -

0172057

Table 1. As is clear from this table, remarkable improvements can be obtained in the adhesive strength by the plasma treatment of the fabric material according to the present invention and the improvement is more remarkable when the rubber compound contains a combination of hexamethylene tetramine as a formaldehyde donor and resorcine as a formaldehyde acceptor as in the rubber compound B.

T a b l e    1

| | Rubber compound | A | B |
|---|---|---|---|
| Poly-ester | Example 1 | 6.5 | 14.3 |
| | Example 3 | 5.8 | 12.8 |
| | Comparative Example 1 | 3.4 | 7.9 |
| | Untreated | 3.2 | 6.7 |
| Aramid | Example 2 | 6.4 | 13.0 |
| | Example 4 | 5.9 | 11.8 |
| | Comparative Example 2 | 3.5 | 8.1 |
| | Untreated | 3.1 | 6.0 |

Example 6.

A cord of polyester fibers of 1500 D/2 (40Z by 40S turns/10 cm) was subjected to a continuous plasma treatment in an apparatus illustrated in FIGURE 1. Thus, the pressure inside the plasma chamber was kept at 0.1 Torr by the balance of continuous introduction of oxygen gas at a rate of 1 liter/minute and continuous evacuation and the cord was exposed to the atmosphere of low temperature plasma generated with the impression of a high frequency electric power. The disposition of the electrodes and conditions of the plasma discharge were substantially the same as in Example 1. The peak discharge voltage and the peak discharge current were 6.0 kV and 18.5 A, respectively. The polyester cord ran through the plasma atmosphere taking 10 seconds.

The thus plasma-treated polyester cord was coated with the RFL adhesive A of the formulation shown below in a coating amount of 5 % by weight as dried followed by drying at 120 °C for 3 minutes and then heat-treated at 235 °C for 2 minutes to give an RFL-treated cord.

Example 7.

The materials and the conditions of the procedure were the same as in Example 6 excepting the replacement of the RFL adhesive A with the RFL adhesive B prepared in the formulation shown below.

Example 8 and Comparative Examples 3 and 4.

The same polyester cord as used in Example 6 was subjected to the plasma treatment under the same conditions as in Example 6 and then coated with 2 % by weight as dry of an epoxy/isocyanate coating solution prepared by dissolving 20.0 g of a 5 % by weight aqueous solution of sodium dioctyl Formulation of RFL adhesives A and B (g)

| RFL adhesive | A | B |
|---|---|---|
| Deionized water | 418.5 | 512.7 |
| 10% aqueous solution of sodium hydroxide | 6.5 | 6.9 |
| Resorcine | 22.5 | 25.4 |
| Formalin (37%) | 21.6 | 56.1 |
| Deionized water | 92.9 | - |
| Rubber latex *1) | 423.7 | 384.6 |
| Ammonia water (28%) | 14.3 | 14.3 |
| Total | 1000.0 | 1000.0 |
| Resorcine/formaldehyde molar ratio | 1:1.3 | 1:3 |
| Precondensate/rubber weight ratio | 1:0.18 | 1:0.30 |

*1) latex (solid content 40 %) of a copolymeric rubber of vinyl pyridine, styrene and butadiene (Nipol 2518FS, a product by Nippon Zeon Co.)

sulfosuccinate, 35.0 g of a phenol-blocked diphenylmethane diisocyanate, 56.0 g of a 0.5 % by weight aqueous solution of diethylaminoethyl methacrylate and 10.8 g of a glycerol diglycidyl ether (Epon 812, a product by Shell Chemical Co.) in 877.3 g of water followed by drying at 120 °C for 3 minutes and then heat treatment at 230 °C for 1 minute. The thus coated cord was further coated with the RFL adhesive A used in Example 6 in a coating amount of 3 % by weight as dry followed by drying at 120 °C for 3 minutes and then heat treatment at 235 °C for 1 minute to give a coated polyester cord (Example 8).

For comparison, the same polyester cord as above before the plasma treatment was coated with the RFL adhesive A followed by drying and heat treatment in the same manner as in Example 8 to give a coated polyester cord (Comparative Example 3).

For further comparison, the same polyester cord was coated in two steps with the above described epoxy/isocyanate coating solution and the RFL adhesive A in just the same manner as in Example 8 to give a coated polyester cord (Comparative Example 4).

Example 9.

The treated or coated cords prepared in Examples 6 to 8 and Comparative Examples 3 and 4 described above were subjected to the tests for the adhesive strength with a rubber by the measurement of the pull-out force, peeling resistance by use of a two-ply peel-test specimen and tensile strength to give the results shown in Table 2 which also includes the percentages of cohesive failure in the peeling test. The testing procedure for the adhesive strength was described already in Example 5 and the tensile strength was determined according to JIS L 1017 while the testing procedure of the peeling resistance was as follows.

Thus, three sheets each having dimensions of 25 mm width by 200 mm length by 1.0 mm thickness and prepared of the rubber compound A used in Example 5 were laid one on the other sandwiching 20 polyester cords in parallel in the length-wise direction between the adjacent rubber sheets and vulcanized by heating at 150 °C for 30 minutes under a pressure of 30 kg/cm$^2$ into a two-ply test specimen of which a perspective view is shown in FIGURE 5 with the base rubber sheets indicated by a and the cords by b. The two-ply test specimen was subjected to the peeling test by pulling two adjacent base rubber sheets in a 180° direction to determine the peeling resistance in kg/25 mm and the percentage of cohesive failure in %.

Table 2

|  | Example | | | Comparative Example | |
|---|---|---|---|---|---|
|  | 6 | 7 | 8 | 3 | 4 |
| Pull-out force, kg/8 mm | 18.5 | 17.3 | 20.2 | 8.5 | 16.2 |
| Peeling resistance, kg/25 mm | 27.5 | 23.5 | 29.5 | 9.5 | 21.5 |
| Cohesive failure, % | 90 | 80 | 95 | 10 | 70 |
| Tensile strength, kg | 23.2 | 23.1 | 22.8 | 22.9 | 21.7 |

As is clear from the results shown in Table 2, the effect of the RFL adhesive in respect of the adhesive strength and peeling resistance is greatly enhanced when the polyester cord has been subjected to the plasma treatment (comparison with Comparative Example 3). The improvement is still remarkable even when comparison is made with Comparative Example 4 in which the polyester cord was subjected to the treatment of two-step coating. The tensile strength is also improved by the plasma treatment preceding coating though less remarkable.

Example 10.

Radial tires of the size 155SR13 for automobile were prepared by using the treated polyester cords obtained in Example 6 in the carcass plies and subjected to the high-speed durability test according to the procedure specified in JIS D 4230.

The density of the polyester cords in the rubber sheet in the carcass ply was 50 cords/5 cm. The sheet was cut in such a manner that the running direction of the cords was perpendicular to the circumferential direction of the tire and the end portion of the carcass ply was folded back outwardly along the tire bead layer to prepare a single-ply radial tire. The belt ply layer of the radial tire was formed of a rubber sheet incorporated with 40 cords/5 cm of steel wire cords each of the cord construction of 1 x 5 with base wires of 0.25 mm diameter. The steel-cord reinforced rubber sheet was cut in such a direction that the running direction of the steel cords made an angle of 20° with the circumferential direction of the tire and two of such cut sheets were laid one on the other in such a manner that the running directions of the steel cords in the cut sheets intersect each with the other to give a two-ply belt structure.

The thus prepared radial tire was mounted on a 4:1/2J x 13 rim and filled with air at a pneumatic pressure of 2.1 kg/cm$^2$. The test running of the tire for the high-speed durability was performed under a load of 370 kg on a rotating drum of smooth surface having a diameter of 1707 mm, after 120 minutes of preliminary running at a velocity of 80 km/ hour, by stepwise increase of the running velocity according to the schedule specified in the above mentioned JIS. The results were that the highest stage of the running conditions of 140 km/hour for 30 minutes specified in the JIS could be cleared without problems at all.

Example 11.

A multifilament cord of 1500 D/2 (30Z by 30S turns/10 cm) of a poly(1,4-phenylene terephthalamide) fibers was subjected to a plasma treatment in the apparatus illustrated in FIGURE 1. Thus, while the pressure inside the plasma chamber was kept at 0.3 Torr by the balance of the continuous introduction of oxygen gas at a constant rate of 3 liters/minute and continuous evacuation, the aramid cord was run through the atmosphere of low temperature plasma generated by the impression of an electric power of 40 kilowatts at a frequency of 200 kHz between the electrodes to induce glow discharge. Each of the input electrodes was in the form of a rod coated with a glass tubing and kept at a distance of 5 cm from the surface of each of the water-cooled grounded electrodes contacting the running fabric material. The peak discharge voltage and the peak discharge current between the electrodes were 5.0 kV and 23.9 A, respectively, and the cord was run through the plasma atmosphere taking about 30 seconds.

The thus plasma-treated aramid cord was coated with the RFL adhesive A (see Example 8) in a coating amount of 5 % as dry followed by drying at 120 °C for 3 minutes and then heat treatment at 235 °C for 2 minutes to give a treated aramid cord.

Example 12.

The materials and the conditions of the procedure were the same as in Example 11 excepting the replacement of the RFL adhesive A with the RFL adhesive B (see Example 8).

Example 13 and Comparative Examples 5 and 6.

The same aramid cord as used in Example 11 was subjected to the plasma treatment under the same conditions as in Example 11 and then coated in two steps first with an epoxy-containing coating solution prepared by dissolving 10 g of a 10 % by weight aqueous solution of sodium hydroxide, 20 g of a 5 % by weight aqueous solution of dioctyl sulfosuccinate, 100 g of 2-pyrrolidone and 20 g of glycerol diglycidyl ether (Epon 812, a product by Shell Chemical Co.) in 850 g of water in a coating amount of 1 % by weight as dry followed by drying at 120 ºC for 3 minutes and heat treatment at 230 ºC for 1 minute and then with the RFL adhesive A in a coating amount of 4 % by weight as dry followed by drying at 120 ºC for 3 minutes and heat treatment at 235 ºC for 1 minute to give a treated aramid cord (Example 13).

For comparison, the same aramid cord as above before the plasma treatment was coated with the RFL adhesive A followed by drying at 120 ºC for 3 minutes and heat treatment at 235 ºC for 2 minutes in the same manner as in Example 13 to give a coated aramid cord (Comparative Example 5).

For further comparison, The same aramid cord was coated in two steps with the above described epoxy-containing coating solution and the RFL adhesive A in just the same manner as in Example 13 to give a coated aramid cord (Comparative Example 6).

Example 14.

The treated or coated aramid cords prepared in Examples 11 to 13 and Comparative Examples 5 and 6 described above were subjected to the tests for the adhesive strength with a rubber, peeling resistance using a two-ply test specimen sandwiching the cords and tensile strength to give the results shown in Table 3 which also includes the percentages of cohesive failure in the peeling test. The procedures for the tests were the same as in Example 9.

Table 3

|  | Example | | | Comparative Example | |
|---|---|---|---|---|---|
|  | 11 | 12 | 13 | 5 | 6 |
| Pull-out force, kg/8 mm | 16.5 | 14.7 | 17.3 | 7.2 | 14.5 |
| Peeling force, kg/25 mm | 26.5 | 23.0 | 29.5 | 8.5 | 21.5 |
| Cohesive failure, % | 90 | 80 | 95 | 10 | 70 |
| Tensile strength, kg | 51.0 | 51.3 | 48.4 | 46.3 | 45.2 |

As is clear from the results shown in Table 3, the effect of the RFL adhesive in respect of the adhesive strength and peeling resistance is greatly enhanced when the aramid cord has been subjected to the plasma treatment (comparison with Comparative Example 5). The improvement is still remarkable even when comparison is made with Comparative Example 6 in which the aramid cord was subjected to the treatment of two-step coating. The tesnile strength is also improved by the plasma treatment preceding coating though less remarkable.

Example 14.

Using the treated aramid cord obtained in Example 11 in the carcass plies and belt plies, radial tires were prepared in the same manner as in Example 10 excepting the replacement of the steel cords in the belt plies with the treated aramid fiber cords as mentioned above. The cord density in the belt ply was 50 cords/5 cm. The high-speed durability test of these tires was undertaken in the same manner as in Example 10 to find that the results were quite satisfactory to pass the highest stage of the running conditions of 140 km/hour for 30 minutes specified in JIS D 4230 with no particular problems.

Example 15 and Comparative Example 7.

A cord of PAN-based carbon fibers of 1800 d/Z ($10^z$ x $10^s$ T/10 cm) was subjected to a low temperature plasma treatment in an apparatus illustrated in FIGURE 1. Thus, the plasma chamber was first evacuated to a pressure of 0.02 Torr and then the pressure inside the plasma chamber was maintained at 0.15 Torr by the balance of the continuous evacuation and continuous introduction of oxygen gas at a rate of 3 liters/minute. The discharge voltage and discharge current were 1.5 kV and 18 A, respectively, and the running carbon fiber cord passed through the plasma atmosphere by taking about 1 minute.

The thus plasma-treated cord of carbon fibers (Example 15) was coated with the RFL adhesive A in a coating amount of 5 % by weight as dried and dried at 120 °C for 3 minutes followed by baking at 235 °C for 2 minutes to give a treated carbon fiber cord.

For comparison (Comparative Example 7), the same carbon fiber cord before plasma treatment was coated with the same RFL adhesive and heat-treated in just the same manner as described above.

The carbon fiber cords treated in the above described manner were subjected to the test of the adhesive strength by the pull-out method to give the results of the pull-out forces of 13.4 kg/8 mm and 10.5 kg/8 mm for the cords of Example 15 and Comparative Example 7, respectively.

- 1 -

0172057

WHAT IS CLAIMED IS:

1.  A method for improving the adhesive strength between a rubber matrix of a fabric-reinforced rubber article and a reinforcing fabric material made of fibers selected from the group consisting of polyester fibers, aramid fibers and carbon fibers embedded in the rubber matrix which comprises: subjecting the reinforcing fabric material in a continuous length before incorporation into the rubber matrix to continuous exposure to low temperature plasma generated in an atmosphere of an inorganic gas under a pressure in the range from 0.001 to 10 Torr by glow discharge.

2.  The method as claimed in claim 1 wherein the inorganic gas is oxygen gas or a gaseous mixture containing at least 10 % by volume of oxygen.

3.  The method as claimed in claim 1 wherein the reinforcing fabric material is in a form of a plain-woven cloth.

4.  The method as claimed in claim 1 which further comprises coating the reinforcing fabric material after the exposure to low temperature plasma with a liquid coating composition containing a prepolymeric condensate of resorcine and formaldehyde and a rubber latex.

5.  The method as claimed in claim 4 wherein the prepolymeric condensate of resorcine and formaldehyde in the liquid coating composition is a condensation product of resorcine and formaldehyde in a molar ratio in the range from 1:0.5 to 1:4.

6. The method as claimed in claim 4 wherein the rubber latex in the liquid coating composition is a latex of a copolymeric synthetic rubber selected from the group consisting of the copolymers of vinylpyridine, styrene and butadiene, styrene and butadiene and acrylonitrile and butadiene or a latex of polychloroprene rubber.

7. The method as claimed in claim 4 wherein the weight ratio of the prepolymeric condensate and the rubber latex in the liquid coating composition is in the range from 0.05:1 to 0.5:1 as solid.

8. The method as claimed in claim 4 wherein the liquid coating composition is an aqueous solution having a pH in the range from 9 to 11.

# FIG.1

# FIG.2

# FIG.3

## FIG.4a

## FIG.4b

## FIG.5

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | MELLIAND TEXTIL BERICHTE, vol. 63, no. 4, 1982, pages 307-313, Heidelberg, DE; W. RAKOWSKI et al.: "Plasmabehandlung von Textilien - Anwendungsmöglichkeiten und Entwicklungschancen" * Pages 309-311, paragraphs 4,5 * | 1-4 | C 08 J 5/06 D 06 M 10/00 |
| X | FR-A-1 510 883 (RADIATION RESEARCH) * Abstract A, nrs. 1-6; page 2, paragraphs 5,6; page 3, paragraphs 1,3-7; examples 1-3,5-7; page 9, paragraph 1; figure * | 1-8 | |
| X | CHEMICAL ABSTRACTS, vol. 97, no. 10, 6th September 1982, no. 73887g, Columbus, Ohio, US; & CS - A - 188 021 (L. AMBROZ et al.) 15-03-1982 | 1-8 | **TECHNICAL FIELDS SEARCHED (Int. Cl.4)** |
| Y | EP-A-0 106 194 (SHIN ETSU) * Claims 1,3; examples * | 1-3 | C 08 J |
| Y | EP-A-0 006 275 (T.N.O.) * Claims 1-3; page 7, line 20 - page 10, line 11 * & JP - A - 80 001 393 | 1-3 | |

--- -/-

The present search report has been drawn up for all claims

| Place of search | Date of completion of the search | Examiner |
|---|---|---|
| THE HAGUE | 30-10-1985 | HALLEMEESCH A.D. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int Cl 4) |
|---|---|---|---|
| A | US-A-2 561 215 (C.J. MIGHTON et al.) <br> * Claims 1-8; examples; column 14, lines 46-54; column 15, lines 14-42 * | 4-8 | |
| A | US-A-3 437 122 (G.E. VAN GILS) <br> * Column 2, lines 46-54 * | 8 | |

TECHNICAL FIELDS SEARCHED (Int. Cl 4)

The present search report has been drawn up for all claims

| Place of search | Date of completion of the search | Examiner |
|---|---|---|
| THE HAGUE | 30-10-1985 | HALLEMEESCH A.D. |